# EUROPÄISCHE PATENTSCHRIFT

(11) **EP 1 525 457 B1**
(45) Veröffentlichungstag und Bekanntmachung des Hinweises auf die Patenterteilung: **30.03.2011**
(21) Anmeldenummer: 03765066.0
(22) Anmeldetag: 21.07.2003
(51) Int. Cl.: G01N 21/88, G01N 21/956, G01N 21/57

(54) **VERFAHREN ZUR QUALITÄTSKONTROLLE VON OBERFLÄCHEN**
METHOD FOR MONITORING THE QUALITY OF SURFACES
PROCEDE POUR LE CONTROLE DE QUALITE DE SURFACES

(30) Priorität: 22.07.2002 DE 10233295
(43) Veröffentlichungstag der Anmeldung: 27.04.2005
(73) Patentinhaber: Volkswagen Aktiengesellschaft, 38436 Wolfsburg (DE)
(72) Erfinder: SONNENBERG, Karl-Heinz, 38442 Wolfsburg (DE); PLACK, Volker, 38542 Leiferde (DE)
(74) Vertreter: Basfeld, Rainer
(86) Internationale Anmeldenummer: PCT/EP2003/007925
(87) Internationale Veröffentlichungsnummer: WO 2004/010124

(56) Entgegenhaltungen:
- EP-A- 1 092 973
- EP-A- 1 176 388
- WO-A-99/04248
- DE-A- 10 042 537
- DE-A- 10 110 994
- DE-A- 19 909 534
- PATENT ABSTRACTS OF JAPAN vol. 2000, no. 01, 31. Januar 2000 (2000-01-31) & JP 11 271038 A (NISSAN MOTOR CO LTD), 5. Oktober 1999 (1999-10-05)

## Beschreibung

Die vorliegende Erfindung betrifft ein Verfahren zur Qualitätskontrolle von lackierten Oberflächen gemäß dem Oberbegriff des Anspruchs 1.

Die DE 101 13 846 A1 beschreibt ein Verfahren zur Qualitätskontrolle von lackierten Oberflächen, bei dem die hinsichtlich ihrer Qualität im Hinblick auf einzelne Kriterien wie beispielsweise Farbe, Glanz oder Welligkeit zu untersuchende Oberfläche mittels eines Lichtsenders in einem Lichtpunktmuster bestrahlt wird und das in einer Videokamera abgebildete Lichtmuster anschließend ausgewertet wird. Es kann dabei nur ein sehr kleiner Ausschnitt der Oberfläche jeweils punktuell untersucht werden. Mehrere in einem Messkopf vorgesehene Monochromatoren sind mit ihren optischen Eintrittsachsen in bestimmten vorgegebenen Winkeln zur Messkopfachse ausgerichtet, wobei diese Winkel jedoch nicht beliebig einstellbar sind. Bei der Messung werden jeweils nur einzelne der vorgenannten Kriterien untersucht. Bei der Bestimmung mehrerer unterschiedlicher Kriterien wie z. B. Farbe und Welligkeit der Oberfläche werden dementsprechend unterschiedliche Werte nebeneinander erhalten. Dies erlaubt zwar eine Feststellung im Hinblick auf eine Abweichung zu einem bestimmten Sollwert, nicht jedoch eine Aussage ob diese Abweichung für das Auge eines Betrachters relevant ist. Weiterhin können bei diesem bekannten Verfahren nur homogene Flächen untersucht werden, das heißt, es ist nicht möglich, beispielsweise Oberflächenausschnitte zu untersuchen, die sich über mehrere Teile erstrecken, zwischen denen Spalten oder Unterbrechungen liegen. In diesen Fällen würden mittels des bekannten Verfahrens unbrauchbare Mischwerte gemessen. Die Vermessung größerer Oberflächenbereiche ist sehr aufwendig, da bei jeder Messung nur vergleichsweise kleine Ausschnitte der Oberfläche vermessen werden und somit eine Vielzahl von Einzelmessungen notwendig sind. Dadurch wird das bekannte Verfahren sehr zeitintensiv.

Die DE 43 09 802 A1 beschreibt ein Verfahren zur Beurteilung einer Farbschicht, wobei die Farbschicht von einer Lichtquelle mit Licht bestrahlt wird und von einem optischen Empfangsmittel wenigstens ein Teil des von der Lichtquelle an der Farbschicht reflektierten Lichts als zweidimensionale Bildpunkt-Information empfangen wird, wobei jedem Bildpunkt neben den beiden geometrischen Koordinaten drei voneinander linear unabhängige Koordinaten (LAB) eines Färbraumes zugeordnet werden, so dass jeder Bildpunkt durch eine fünfdimensionale Information dargestellt wird. Dieses vorbekannte Verfahren dient zur produktionsnahen Farbkontrolle von Produkten mit bildgebenden farbtüchtigen Sensoren wie Farbmatrix, Farbzeilen oder punktweise arbeitenden Abtastern. Hierbei wird aus den Signalen dieser Sensoren sowohl für eine Referenz als auch für Prüflinge jeweils eine oder mehrere mehrdimensionale Histogramme der Farbvektorkomponenten berechnet und aus dem Vergleich dieser Histogramme Maße für die Farbabweichung oder Farbübereinstimmung gewonnen. Das bekannte Verfahren hat den Nachteil, dass die Ermittlungen der Histogramme sowie deren Vergleich relativ aufwendig ist, sowohl in zeitlicher als auch in programmtechnischer Hinsicht. Zudem werden aufwendige Recheneinrichtungen benötigt, die relativ teuer sind.

Die ältere nicht vorveröffentlichte Anmeldung DE 101 03 555.1 der Anmelderin beschreibt ein Verfahren zur Beurteilung einer Farbschicht, insbesondere des Oberflächeneindrucks der Farbschicht auf einen Betrachter, das mit geringem apparativen und programmtechnischen Aufwand eine schnelle Beurteilung der Farbschicht ermöglicht und eventuelle Farbabweichungen oder sonstige Fehler sicher erkennt. Bei diesem Verfahren wird aus der mittels eines optischen Empfangsmittels aufgenommenen fünfdimensionalen Information eine zweidimensionale Information (yL) extrahiert, die ein Maß für den Farb- und/oder Helligkeitsverlauf des empfangenen Lichts in einem vorbestimmten geometrischen Bereich der Farbschicht ist. Dieses Verfahren hat den Vorteil, dass durch geeignete Abstimmung des Auswerteprogramms auf einfache Weise die Farbwahrnehmung des menschlichen Auges nachgebildet werden kann. Es wird eine Art "optischer Kunstkopf" für die Überprüfung von Farbschichten zur Verfügung gestellt. Bezüglich näherer Einzelheiten dieses Verfahrens wird auf die Beschreibung und die Ansprüche der vorgenannten Anmeldung verwiesen, auf deren Inhalt hiermit vollinhaltlich Bezug genommen wird.

Ein Verfahren zur Qualitätskontrolle von lackierten Oberflächen der eingangs genannten Art ist aus der EP-A-1 176 388 bekannt. Dabei wird über einen programmgesteuerten Roboter ein Messgerät über die beschichtete Oberfläche bewegt, mit dem an beliebig gewählten Punkten ein für die Beschichtungsqualität relevanter Parameter gemessen wird. Es können mehrere für die Qualität der Lackierung relevante Parameter gemessen werden, wobei dies beispielsweise neben der Schichtdicke der Farbton oder der Oberflächenverlauf sein können. Weiterhin können während der Messungen die Ortskoordinaten der von dem Roboter angefahrenen Messpunkte in einem dreidimensionalen kartesischen Bezugskoordinatensystem selbsttätig ermittelt werden. Zugleich werden für jede Messung die Messwinkel als Koordinaten der Schwenkbewegung oder Drehstellung des Messgerätes festgestellt. Es können somit gewissen Messpunkten einerseits deren Koordinaten und andererseits die entsprechenden Messwerte der Schichtdicke, des Farbtons oder des Verlauf zugeordnet und gespeichert werden Ausgehend von diesen gespeicherten Mess- und Koordinatendaten kann dann ein dreidimensionales Bild der Karosserie erstellt und auf einem Bildschirm dargestellt werden, das auch die Messwerte wiedergibt.

Die DE 199 09 534 A1 betrifft ein Verfahren zur Qualitätskontrolle einer lackierten Oberfläche, bei dem eine optische Einrichtung verwendet wird mit einer Lichtquelle, deren Licht in einem vorbestimmten Winkel auf eine Messfläche gerichtet ist. Mittels einer zweiten optischen Einrichtung, die unter einem vorbestimmten Winkel zu der Messfläche ausgerichtet ist, wird das von der Messfläche reflektierte Licht aufgenommen. Diese zweite optische Einrichtung enthält einen Fotosensor, der ein elektrisches Messsignal ausgibt, welches für das reflektierte Licht charakteristisch ist. Mittels einer Auswerteeinrichtung wird das reflektierte Licht ausgewertet und daraus wird eine Strukturkennzahl abgeleitet, die eine Eigenschaft der lackierten Oberfläche charakterisiert.

In der WO 99 04248 A wird beschrieben, wie mittels einer optischen Messvorrichtung ein scheibenförmiger Lichttunnel als Lichtvorhang erzeugt wird, durch den eine Rohkarosserie transportiert werden kann. Dabei wird ein in einer Querebene der Rohkarosserie liegender Messstreifen der Oberfläche der Karosserie bestrahlt. Eine Projektionsvorrichtung strahlt eine Gitterstruktur ab und entsprechend wird der Messstreifen der Oberfläche der Karosserie mit einem definierten Gitterbild aus helleren und dunkleren Gitterbildpunkten bestrahlt. Eine Kamera erfasst dann wiederum reflektiertes Licht, welches von dem bestrahlten Messstreifen der Oberfläche reflektiert wird und als Abbildung der Gitterbildpunkte unter einem definierten Winkel erfasst wird. Weiterhin wird die von der Kamera detektierte Lage und Gestalt der Abbildung der reflektierten Gitterbildpunkte als Messsignal einem Rechner zugeführt. In der Rechneranlage wird durch mathematische Methoden bestimmt, wo Unebenheiten in der lackierten Oberfläche vorhanden sind, wobei die Rechneranlage auch einen elektronischen Vergleich mit bereits eingespeicherten abgelegten Fehlermustern vornimmt.

Die DE 100 42 537 A1 beschreibt ein Verfahren zur Überprüfung einer lackierten Oberfläche auf fehlerhafte Stellen, deren jeweilige Koordinateninformation ermittelt und auf einer elektronischen Anzeigeeinrichtung dargestellt wird. Bei dieser elektronischen Anzeigeeinrichtung handelt es sich um ein Durchsichtsystem in Form einer teilweise transparenten von einem Benutzer zu tragenden Datensichtbrille. Es kann auch eine Laserprojektionseinrichtung verwendet werden, die die darzustellenden Bilder auf die Netzhaut eines Auges des Benutzers projiziert. Die Anzeigeeinrichtung wird über einen Bügel am Ohr des Benutzers mechanisch fixiert. Über ein Mikrofon kann der Benutzer mittels Sprachsteuerung Kommandos an den Rechner abgeben.

Die Aufgabe der vorliegenden Erfindung besteht darin, ein Verfahren zur Qualitätskontrolle von lackierten Oberflächen der eingangs genannten Gattung zu schaffen, bei dem das Zusammenspiel mehrerer Kriterien berücksichtigt wird und welches somit eine Erfassung und Qualifizierung der Oberfläche ermöglicht, die der Wahrnehmung des menschlichen Auges entspricht. Weiterhin ist es Anliegen der Erfindung, ein Verfahren der eingangs genannten Art zu schaffen, bei dem gleichzeitig größere Bereiche der untersuchten Oberfläche erfasst werden können, so dass das Verfahren insgesamt weniger aufwendig ist. Zudem soll ein Verfahren der genannten Art zur Verfügung gestellt werden, welches vielfältigere Anwendungsmöglichkeiten erlaubt.

Die Lösung der vorgenannten Aufgabe liefert ein Verfahren der eingangs genannten Gattung mit den kennzeichnenden Merkmalen des Anspruchs 1. Die Unteransprüche betreffen bevorzugte Ausgestaltungen der Erfindung.

Gemäß Anspruch 1 ist vorgesehen, dass der aussagekräftige Wert durch Vergleich von zumindest Teilen der von dem Bilderfassungselement aufgenommenen Oberfläche mit einem Kontrollmodell erhalten wird und dass das Kontrollmodell durch Mittelung über eine Mehrzahl von Messungen erstellt wird. Der Begriff "Wert" ist dabei definitionsgemäß nicht einschränkend dahingehend zu verstehen, dass es sich um einen Zahlenwert handeln muss. Vielmehr kann dieser "Wert" beispielsweise eine Abbildung, z. B. ein Foto eines untersuchten Ausschnitts der Oberfläche sein.

Ein wichtiger Unterschied zu dem eingangs genannten gattungsbildenden Stand der Technik besteht bei dem erfindungsgemäßen Verfahren darin, dass die geodätische (ortsbezogene) Ausgabe der Messwerte, insbesondere in Form eines Bildes oder eines Graphes des vermessenen Objekts erfolgt. Vorzugsweise wird bei dem erfindungsgemäßen Verfahren ein geodätischer Verlauf von der von dem Bilderfassungselement erfassten Oberfläche mit dem aussagekräftigen Wert mit ausgegeben. Farbe, Wolkigkeit und Farbverlauf können auch als Bestandteil der Farbtonhomogenität gewertet werden.

Wenn im Rahmen der vorliegenden Erfindung von lackierten Oberflächen die Rede ist, so können dies Oberflächen sein, die nur eine oder mehrere übereinanderliegende Lackschichten aufweisen. Die farbbestimmende Schicht muss bei mehrschichtigen Lackierungen selbstverständlich nicht die oberste Schicht sein, letztere kann vielmehr beispielsweise auch ein Klarlack sein. Die farbbestimmende Schicht ist im Sinne der Erfindung daher bei mehrschichtigen Lackierungen diejenige Lackschicht, die den vorgesehenen endgültigen Farbton des lackierten Gegenstandes bestimmt.

Der von der Auswerteeinheit für mindestens die beiden für die Qualität der Oberfläche relevanten Kriterien ausgegebene aussagekräftige Wert kann vorzugsweise in Form eines Abbilds der von dem Bilderfassungselement aufgenommenen Oberfläche ausgegeben werden- Dieser aussagekräftige Wert kann insbesondere durch Vergleich von zumindest Teilen der von dem Bilderfassungselement aufgenommenen Oberfläche mit dem Kontrollmodell durch Einblendung des Kontrollmodells in das Abbild erhalten werden. Ein solches Kontrollmodell kann beispielsweise dadurch ermittelt werden, dass mehrere Serienkarossen, insbesondere 10 bis 100, vorzugsweise 35 - 65 solcher Serienkarossen vermessen und hieraus ein Mittelwert gebildet wird. Durch diese Vorgehensweise wird insbesondere die Wolkigkeit eines einzelnen Kraftfahrzeugs herausgemittelt, so dass aus dem Kontrollmodell sehr gut Rückschlüsse auf die einzelne Karosse gezogen werden können.

Eine Weiterbildung der Erfindung sieht vor, dass der aussagekräftige Wert in Form eines Verlaufes über die von dem Bilderfassungselement aufgenommene Oberfläche ausgegeben wird. Dieser Verlauf kann beispielsweise in einer Grafik ausgegeben werden, in der mindestens eine Dimension der geodätische Verlauf ist und mindestens eine Dimension zumindest eine Auswahl der für die Qualität der Oberfläche relevanten Kriterien wiedergibt. Als für die Qualität relevante Kriterien können vorzugsweise Farbe, insbesondere ein Farbmodell, zum Beispiel RGB, LAB, YIQ oder andere und/oder Glanzgrad und/oder Wolkigkeit und/oder Farbverlauf und/oder Struktur bzw. Glattheit (Verlauf) und/oder die Oberflächenwirkung in Übergangsbereichen zweier unterschiedlicher Bauteile erfasst und bewertet werden.

Das erfindungsgemäße Verfahren kann als Simulationsverfahren verstanden werden, welches das Ziel hat, eine hinsichtlich ihrer Qualität zu untersuchende Oberfläche der Wahrnehmung des menschlichen Auges entsprechend zu erfassen und zu qualifizieren. Insbesondere bei lackierten Oberflächen von beispielsweise Karosserieteilen oder Karosserien von Automobilen wird die Farbwahrnehmung des menschlichen Auges bestimmt durch Farbe, Form und Licht, ergänzt durch spezifische Eigenschaften der lackierten Oberfläche wie z. B. Glanzgrad oder Struktur. Streuung und Reflexion an kleinen Strukturen der Lackierung (z. B. Orangenhaut) führen zu einer Übersteuerung des Farbeindrucks, der unter anderem durch die Beleuchtungsart und die Remission der Farbschicht entsteht. Ursache hierfür sind Reflexionen an geometrischen Zonen, die als "Glanz" erfasst werden. Als für die Qualität relevante Kriterien werden daher erfindungsgemäß Farbe, Glanzgrad, Struktur bzw. Glattheit (Verlauf) und/oder die Oberflächenwirkung in Übergangsbereichen zweier unterschiedlicher Bauteile erfasst und bewertet. Ein Vorteil liegt gemäß einer Weiterbildung des erfindungsgemäßen Verfahrens darin, dass auch nicht homogene Oberflächenbereiche erfasst werden können, das heißt Bereiche mit beispielsweise Spalten oder Unterbrechungen, da sich die erfasste Oberfläche über mehrere miteinander verbundene Bauteile erstreckt. Dies ist beispielsweise bei Automobilkarosserien oder Karosseriebauteilen häufiger der Fall, die beispielsweise mehrere Einzelbauteile oder Bauteile mit Anbauteilen umfassen. Da das erfindungsgemäße Verfahren auch die Erfassung nicht homogener Oberflächenbereiche ermöglicht, können gleichzeitig größere Oberflächenbereiche einer zu untersuchenden Gesamtfläche eines Gegenstands erfasst werden, auch wenn sich dort Spalten, Unterbrechungen, Aussparungen oder dergleichen bedingt z. B. durch Anbauteile befinden. Dies erlaubt gegenüber den bislang bekannten Verfahren eine wesentlich rationellere Vorgehensweise. Durch die Erfassung größerer Oberflächenbereiche wird die Anzahl der erforderlichen Einzelmessungen stark reduziert.

Im Rahmen des erfindungsgemäßen Verfahrens können beispielsweise bei einer Messung wenigstens 2 % einer hinsichtlich der Qualität der Oberfläche zu untersuchenden Gesamtfläche eines Gegenstands erfasst werden. Vorzugsweise wird bei dem erfindungsgemäßen Verfahren mittels des Bilderfassungselements eine Aufnahme eines Ausschnitts von wenigstens 5 %, vorzugsweise wenigstens 10 %, weiter vorzugsweise wenigstens 20 % einer hinsichtlich der Qualität der Oberfläche zu untersuchenden Gesamtfläche eines Gegenstands erstellt und dann ausgewertet. Ebenso wird vorzugsweise eine Strecke von mindestens 3 cm, insbesondere mindestens 7 cm, vorzugsweise mindestens 15 cm und/oder eine Fläche von mindestens 4 cm², insbesondere mindestens 25 cm², vorzugsweise mindestens 100 cm² erfasst.

Es ist vorteilhaft, dass mittels des erfindungsgemäßen Verfahrens gleichzeitig größere Oberflächenbereiche der hinsichtlich der Qualität zu kontrollierenden Oberfläche erfasst werden können. Beispielsweise können mittels des Bilderfassungselements Bildpunkte aufgenommen werden, zum Beispiel mittels einer Digitalkamera mit 400.000 Pixel oder mehr. Auf diese Weise kann bis zu jedem Pixel ein Bildpunkt mit einem ReferenzbildpunKt verglichen werden, wobei ein Ergebnis sichtbar gemacht werden kann, welches die Abweichung zwischen dem jeweiligen Bildpunkt des Objekts und dem Referenzbildpunkt wiedergibt. Alternativ dazu kann man beispielsweise Referenzbilder zum Vergleich neben das Objektbild legen oder in das Objektbild einblenden, wodurch Abweichungen an den Schnittstellen leicht sichtbar werden.

Bei der Aufnahme werden vorzugsweise das Objekt und eine Kamera exakt zueinander positioniert, wobei die Kamera vorzugsweise schwenkbar ist, um das Objekt aus mehreren Winkeln aufnehmen zu können. Auch die Beleuchtung wird exakt positioniert. Durch Aufnahme einer Referenz, bei der eine vorgegebene Anzahl gleicher Karosserien (zum Beispiel 50) mit dem gleichen Lack aufgenommen werden, erhält man beispielsweise einen Mittelwert. Durch Vergleich des für das Objekt erhaltenen Werts mit diesem Mittelwert lassen sich leicht individuelle Abweichungen feststellen, die dann entweder als Graph oder als Differenzbild oder als Schnittbild wiedergegeben werden. Bei der Darstellung als Graph kann man beispielsweise eine bestimmte Linie über die Karosse legen Wendet man die Differenzbildmethode an, kann man beispielsweise als Bezugsfarbe schwarz wählen oder weiß. Wenn dann keine Abweichung zur Referenz besteht, wird schwarz ausgegeben. Die Abweichung zur Referenz ist umso stärker, je mehr die Abweichung vom schwarz ist. Bei der vorgenannten Schnittbildmethode kann man beispielsweise die Referenz über ein Bauteil legen, bei dem Spalten auftreten, wie zum Beispiel im Bereich des Tankdeckels einer Karosserie. Dadurch wird die Abweichung im Übergangsbereich zwischen der Referenz und dem kontrollierten Objekt leicht sichtbar.

Bei der Erfassung der zu untersuchenden Oberfläche mittels eines Bilderfassungselements arbeitet man vorzugsweise unter normierten Bedingungen, das heißt, dass die Aufnahme vorzugsweise in einem Raum mit schwarzer Oberfläche erfolgt. Vorzugsweise erfolgt die Erfassung auch unter normierten Bedingungen hinsichtlich der Beleuchtung, beispielsweise mittels einer tageslichtsimulierenden Normlichtquelle. Weiterhin wird vorzugsweise mittels eines Bilderfassungselements ein digitales Foto erstellt, welches dann bei der Auswertung bewertet wird.

Um eine Auswertung zu ermöglichen, in wie weit die von der erfassten Oberfläche gefertigte Aufnahme bestimmten Sollvorgaben entspricht, legt man gemäß einer Weiterbildung der Erfindung vorzugsweise für einen bestimmten Farbton ein Farbkontrollmodell fest, welches dann mit einem als Ergebnis der Auswertung bei der Kontrolle der jeweiligen Oberfläche erhaltenen Foto verglichen wird.

Gemäß einer bevorzugten Ausführungsform der Erfindung untersucht man vorzugsweise lackierte Oberflächen von Karosserien oder Karosseriebauteilen eines Automobils.

Es wurde bereits ausgeführt, dass die lackierte Oberfläche, deren Qualität erfindungsgemäß kontrolliert wird, eine mehrschichtige Lackierung aufweisen kann. Vorzugsweise weist diese mindestens eine farbbestimmende Schicht auf, insbesondere in einer durchschnittlichen Dicke von mindestens 5 µm (bis 70 µm) und/oder eine Klarlackschicht in einer durchschnittlichen Dicke von mindestens 5 µm, insbesondere mindestens 15 µm bis 120 µm.

Wenn im Rahmen des erfindungsgemäßen Verfahrens als für die Qualität relevantes Kriterium der Farbverlauf erfasst wird, dann sollte vorzugsweise der Farbverlauf eine Farbton- und/oder Helligkeitsänderung beinhalten, die sich über eine Strecke von mindestens 5 mm, insbesondere mindestens 10 mm, bevorzugt mindestens 20 mm erstreckt.

Die vorliegende Erfindung betrifft weiterhin ein Verfahren zur Produktion eines lackierten Gegenstands, insbesondere eines Kraftfahrzeugs, welches dadurch gekennzeichnet ist, dass mindestens ein Teilbereich des lackierten Gegenstandes nach mindestens einem der zuvor beschriebenen Verfahren zur Qualitätskontrolle von Oberflächen kontrolliert wird und in Abhängigkeit des ausgegebenen gemeinsamen Werts eine Änderung mindestens eines Applikationsparameters des Lackierprozesses und/oder eine Änderung des Lackmaterials erfolgt.

Die vorliegende Erfindung liefert ein Simulationsverfahren, bei dem die Wahrnehmung des menschlichen Auges weitestgehend nachvollzogen wird. Ein Freiheitsgrad des betrachtenden menschlichen Auges ist der Betrachtungswinkel. Die winkelabhängigen Beiträge der Farbwahrnehmung können auch in dem erfindungsgemäßen Verfahren durch beliebige Einstellung des Betrachtungswinkels erfasst werden. Aufgrund dieser winkelabhängigen Beiträge kann eine materialspezifische Kennlinie erstellt werden. Ein solches "Fingerprint" liefert eine Information, die beispielsweise bei Lackierprozessen in der Automobilindustrie zur Bewertung der Risiken einzelner Arbeitsschritte genutzt werden könnte. Beispielsweise bedeutet ein steiler Gradient in der Materialkennlinie "Farbwahmehmung", dass ein erhöhtes Risiko besteht und hohe Anforderungen zur Einhaltung einer gleichbleibenden Qualität bei einer Serienlackierung einzuhalten sind. Vorteilhaft ist, dass das erfindungsgemäße Verfahren Messungen in Winkelbereichen zulässt, die mittels herkömmlicher Messinstrumente nicht messbar waren.

Bei dem erfindungsgemäßen Verfahren wird vorzugsweise in einer eigenen Messatmosphäre gemessen, bei der Lichtquellen, die die Wahrnehmung eines Beobachters beeinflussen können, ausgeschlossen sind (normierte Beleuchtung etc.). Die Anwendung des erfindungsgemäßen Verfahrens in der Qualitätskontrolle industrieller Lackierprozesse, beispielsweise in der Automobilindustrie, ermöglicht in vorteilhafter Weise die frühzeitige Feststellung hoher Risiken und damit ein Einwirken auf nachgeschaltete Verfahrensschritte im Lackierprozess, insbesondere eine Nacharbeitung zur Korrektur aufgetretener Lackierfehler, wodurch erhebliche Kosten vermieden werden können.

Die Bedeutung des erfindungsgemäßen Verfahrens ergibt sich auch daraus, dass beispielsweise bei der Automobilfertigung eine erheblich steigende Anzahl unterschiedlicher Farbtöne zu verzeichnen ist, wobei z. B. bei der Außenlackierung von Fahrzeugen zunehmend mit Effektgebern gearbeitet wird. Derartige Effektlacke können häufig mit der herkömmlichen Messmethodik einer Farbmetrik nicht mehr eindeutig beschrieben werden.

Einen besonderen Vorteil liefert die im Rahmen des erfindungsgemäßen Verfahrens bevorzugte Online-Erfassung der Daten betreffend die jeweilige lackierte Oberfläche. Abweichungen der erfassten Daten der Sollvorgabe können z. B. mittels einer Ampelschaltung im Rahmen der Toleranzvorgabe bewertet werden und anschließend kann man die für die Lackierung veränderlichen Parameter entsprechend einstellen, z. B. indem man Anpassungen bei der Lackcharge, der Luftmenge, den Klimabedingungen vornimmt etc.

Bei einer Serienlackierung im industriellen Bereich, z. B. in der Automobilindustrie erfolgt in der Regel nach der Aufbringung diverser Lackschichten eine Klarlackierung und anschließend eine Ofentrocknung. Bei Anwendung des vorliegenden Verfahrens kann beispielsweise der Anlagenführer einer solchen Lackieranlage als Ergebnis der Auswertung eine Bilddarstellung erhalten, die er bewerten kann. Diese Bilddarstellung kann mit einem zuvor gefertigten Farbkontrollmodell verglichen werden und bei unzulässigen Abweichungen kann ein korrigierender Eingriff in einzelne Schritte des Lackierverfahrens erfolgen. Die bei der Auswertung erhaltene Bilddarstellung kann mit einem Auswertstreifen versehen sein. Das genannte Farbkontrollmodell (FKM) dient der Festlegung des Fertigungsstands eines bestimmten Farbtons. Auch in komplexen Fällen, z. B. bei sogenannten Effektlacken, ist eine einfache Darstellung des Farbkontrollmodells möglich, wobei im Vergleich zu dem jeweiligen Farbkontrollmodell ein entsprechender Toleranzbereich festgehalten werden kann. Wenn eine solche Lackieranlage beispielsweise mit einem frischen Farbton befüllt wurde, kann man beispielsweise so vorgehen, dass man zunächst anhand eines sogenannten Vorläuferblocks von einigen Fahrzeugen alle notwendigen Parameter überprüft, die den Farbton und weitere Merkmale der Oberfläche in Bezug auf den Eindruck des Betrachters bestimmen. Wenn eine positive Rückmeldung nach Anwendung des erfindungsgemäßen Qualitätskontrollverfahrens beispielsweise in einer automatischen Erfassungsstation vorliegt, kann der Anlagenführer die weitere Fertigung freigeben. Werden dagegen Abweichungen festgestellt, bei denen der vorgegebene Toleranzbereich überschritten wird (rote Ampel in einer sogenannten Ampelschaltung) wird die Fertigung des entsprechenden Farbtons gestoppt.

Es kann auch beispielsweise zunächst eine Pilotserie gefahren werden, wobei die dabei erfassten Werte danach statistisch ausgewertet werden. Aus der Form der Streuung kann man eine grobe Abschätzung hinsichtlich der erforderlichen Lackmaterialien und Applikationsorgane für die Aufbringung des Lacks vornehmen. Beispielsweise vorhandene Wolkigkeiten und/oder Farbverläufe können analysiert werden. Anschließend erfolgt eine Optimierung des Lackiervorgangs. Dabei ist es vorteilhaft, wenn man insbesondere kritische Bereiche der Gesamtoberfläche berücksichtigt. Dies sind bei der Lackierung eines Fahrzeugs diejenigen Stellen, an denen unterschiedliche Teile zusammentreffen, oder solche Oberflächenbereiche, die aufgrund ihrer Form die Wahrnehmung des spezifischen Farbtons durch den Betrachter besonders beeinflussen. Derartige Oberflächenbereiche können in dem vorliegenden Verfahren dann schwerpunktmäßig berücksichtigt werden.

Das erfindungsgemäße Verfahren ermöglicht eine Kostenoptimierung durch reduzierten Material- und Personaleinsatz, wenn man sich beispielsweise auf diejenigen Bereiche einer Automobilkarosserie konzentriert, die eine besondere Wirksamkeit auf das Auge des Betrachters ausüben. Den mit dieser Optimierung betrauten Fachkräften einer Lackiererei können alle bei vorherigen Pilotserien erhaltenen Bilddaten sowie die Ergebnisse der Auswertung dieser Daten mittels geeigneter Software zur Verfügung gestellt werden. Durch Darstellung von Differenzbildern können die Bereiche bestimmt werden, in denen sich Abweichungen zeigen. Bei Aufbringung mehrschichtiger Lacke, kann beispielsweise ein aufzubringender Decklack in Abhängigkeit der für den jeweiligen Basislack erhaltenen Ergebnisse optimiert werden. Insbesondere bei komplexem mehrschichtigem Lackaufbau können solche Optimierprozesse unter Berücksichtigung der Erfahrung der einzelnen jeweils vorangegangenen Verfahrensschritte iterativ erfolgen.

Nachfolgend wird die vorliegende Erfindung anhand von Ausführungsbeispielen unter Bezugnahme auf die beiliegenden Zeichnungen näher beschrieben. Dabei zeigen
- Fig. 1: eine schematische Darstellung eines Regelkreises für die Optimierung eines Lackierverfahrens in der Automobilindustrie gemäß der Erfindung
- Fig. 2: eine grafische Darstellung des Farbverlaufs (für die Helligkeit) einer Prüfkarosserie, wobei es sich um eine Rohkarosserie handelt
- Fig. 3: eine grafische Darstellung betreffend den Farbverlauf (für die Helligkeit) eines Fertigfahrzeugs

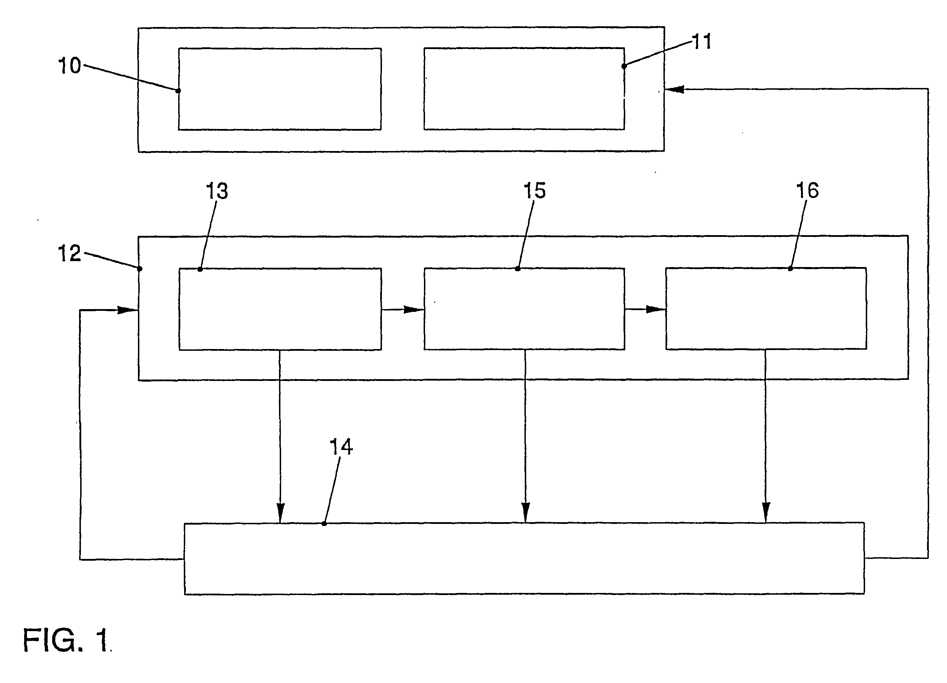

Unter Bezugnahme auf das in Fig. 1 dargestellte Prozessschema wird ein online durchführbarer Regelkreis für die Optimierung eines Lackierverfahrens in der Automobilindustrie als Ausführungsbeispiel der Erfindung nachfolgend näher beschrieben:

Unter Einsatz eines von einem Lacklieferanten erhaltenen Ausgangsmaterials 10 für einen Basislack wird in einer Lackiererei 12 der entsprechende Basislack 13 auf eine zu lackierende Oberfläche eines Karosserieteils aufgebracht. Anschließend wird mittels des erfindungsgemäßen Verfahrens die Qualität der aufgebrachten Lackoberfläche kontrolliert und anhand zuvor erhaltener Farbkontrollmodelle mit einem Qualitätsstandard verglichen. Werden bei dieser der Wahrnehmung des menschlichen Auges nachgebildeten Mess- und Auswerteeinrichtung 14 Abweichungen von den Sollvorgaben festgestellt, werden gegebenenfalls Veränderungen an der als Ausgangsmaterial für den Basislack dienenden Lackcharge 10 vorgenommen oder aber das Verfahren zur Aufbringung des Basislacks 13 wird durch Veränderung anderer Verfahrensparameter optimiert.

Danach wird unter Verwendung eines Ausgangsmaterials 11 eines Lacklieferanten für die Herstellung eines Klarlacks auf die bereits mit dem gegebenenfalls mehrschichtigen Basislack beschichtete Oberfläche der Klarlack 15 aufgebracht und es erfolgt nach Durchführung des Trocknungsprozesses 16 erneut die Qualitätskontrolle der erhaltenen Lackoberfläche nach dem erfindungsgemäßen Verfahren, wobei bei Abweichungen von den Sollvorgaben wiederum auf die Zusammensetzung des Ausgangsmaterials 11 für die Herstellung des Klarlacks oder auf andere Verfahrensparameter Einfluss genommen wird, bis ein optimiertes Ergebnis erhalten wird.

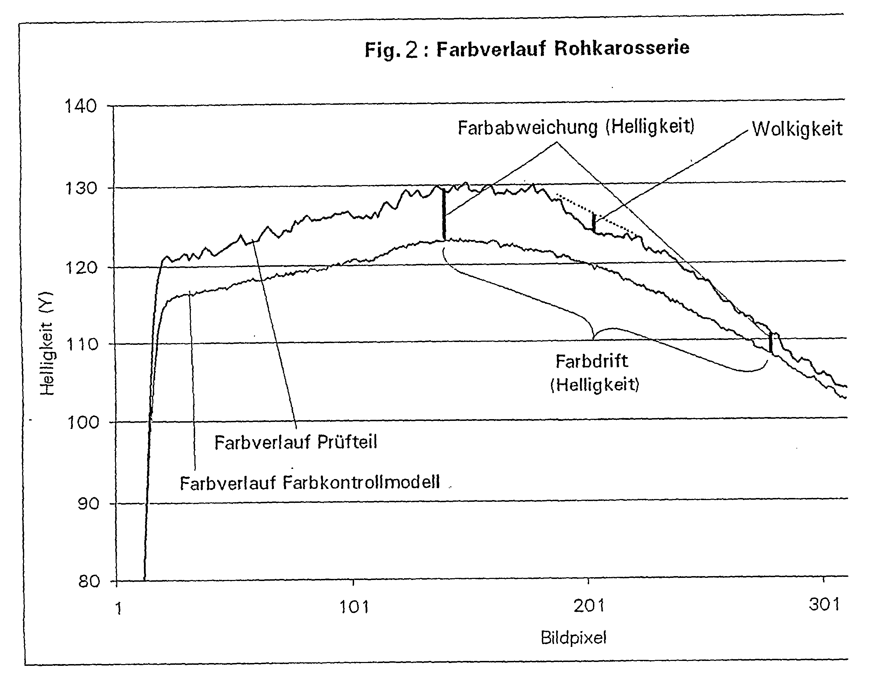

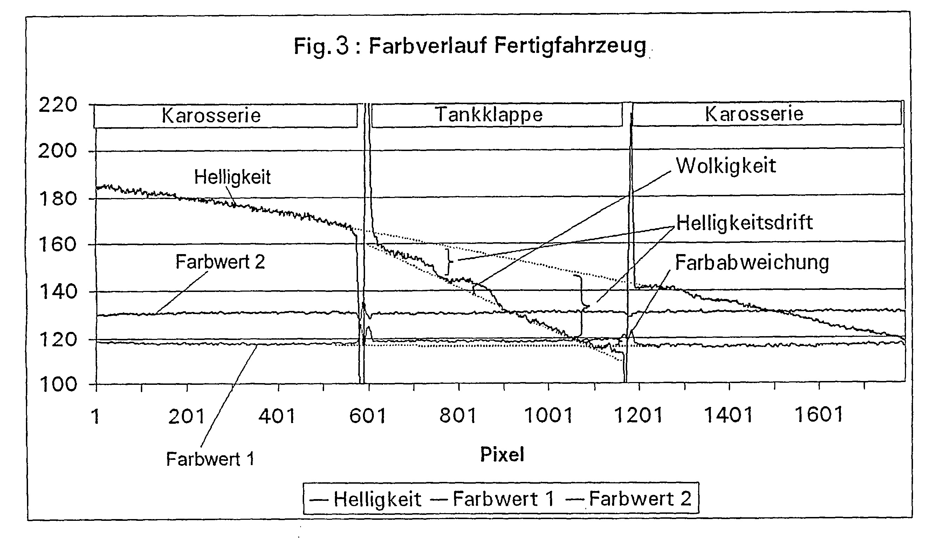

Nachfolgend wird unter Bezugnahme auf die Figuren 2 und 3 eine beispielhafte grafische Darstellung im Rahmen eines erfindungsgemäßen Verfahrens zur Qualitätskontrolle einer lackierten Oberfläche näher erläutert. Fig. 2 zeigt eine Darstellung des Farbverlaufs einer Prüfkarosserie aus einer Karosserielackiererei einer Automobilfabrik, wobei im oberen Kurvenverlauf jeweils die Helligkeit eines untersuchten Objekts dargestellt ist, während im unteren Kurvenverlauf der entsprechende Farbverlauf des gleichen Bildausschnitts eines Farbkontrollmodells wiedergegeben ist. Die Messung erfolgte jeweils an der hinteren rechten Karosserieseite unter normierten Bedingungen, das heißt Verwendung einer Normlichtquelle D 65 und Aufnahme unter einem Aufnahmewinkel von 75° in einem reflexionsfreien Raum. Aufgetragen sind die über die Breite (ca. 10 mm) gemittelten Farbwerte der einzelnen Bildpixel eines ca. 250 mm langen, von oben nach unten verlaufenden Bildausschnitts, das heißt bei dem konkreten Objekt vom Fensterausschnitt der Karosserie nach unten in Richtung zur Stoßfängeranbindung.

Der untere Kurvenverlauf zeigt den Farbverlauf des gleichen Bildausschnitts des Farbkontrollmodells, welches durch Mittelung der Aufnahmen von 40 Serienkarosserien gleichen Farbtons erhalten wurde. Eine solche größere Anzahl von Aufnahmen für die Gewinnung des Farbkontrollmodells ist empfehlenswert, um Farbtoninhomogenitäten wie Wolkigkeiten und Farbdriften zu eliminieren. Die Wolkigkeit wird durch Unstetigkeiten im oberen Kurvenverlauf belegt. Die an mehreren Stellen eingezeichneten Balken zeigen die jeweilige Farbtonabweichung entsprechend der Differenzwerte zwischen beiden Kurven. Weiterhin ist die Farbdrift erkennbar, wobei man der Darstellung entnimmt, dass die Farbabweichung in der Helligkeit in der grafischen Darstellung von links nach rechts abnimmt. Die Wolkigkeit wird in der oberen Kurve an einer stelle rechts vom Maximum besonders deutlich sichtbar, wo sich eine Einbuchtung im Kurvenverlauf ergibt, wobei der an dieser Stelle zu erwartende Kurvenverlauf durch eine strichpunktierte Linie wiedergegeben ist.

Fig. 3 zeigt die Darstellung eines Farbverlaufs bei einem Fertigfahrzeug, wobei dieser verschiedene Karosseriebereiche umfasst. Es ist der Farbverlauf für Helligkeit, Farbwert 1 und Farbwert 2 wiedergegeben. Die Messung erfolgte an der hinteren rechten Fahrzeugseite bei diffusem Außenlicht. Aufgetragen sind die über die Höhe (ca. 10 mm) gemittelten Farbwerte der einzelnen Bildpixel eines ca. 450 mm langen, von links nach rechts durch die Tankklappe verlaufenden Bildausschnitts. Das Spaltmaß zwischen Karosserie und Tankdeckel führt zu Helligkeitsminima und Helligkeitsmaxima. Durch Interpolation der Karosseriefarbwerte im Tankdeckelbereich (gestrichelte Linie in Fig. 3) werden die relativen Farbunterschiede zwischen Tankdeckel und Karosserie sowie die Helligkeitsdrift zwischen linker und rechter Tankdeckelanbindung erkennbar. Die Wolkigkeit resultiert wiederum direkt aus der unterbrochenen Kontinuität des Helligkeitsverlaufs auf der Tankklappe.

## Patentansprüche

1. Verfahren zur Qualitätskontrolle von lackierten Oberflächen, umfassend eine Messeinrichtung mit wenigstens einem Bilderfassungselement, wobei wenigstens zwei unterschiedliche für die Qualität der Oberfläche relevante Kriterien gemeinsam erfasst und mittels einer Auswerteeinheit ausgewertet werden, und wobei von der Auswerteeinheit ein für mindestens diese beiden Kriterien aussagekräftiger Wert in Form eines Abbilds oder Fotos der von dem Bilderfassungselement aufgenommenen Oberfläche oder in Form einer Grafik ausgegeben wird, **dadurch gekennzeichnet, dass** der aussagekräftige Wert durch Vergleich von zumindest Teilen der von dem Bilderfassungselement aufgenommenen Oberfläche mit einem Kontrollmodell erhalten wird und dass das Kontrollmodell durch Mittelung über eine Mehrzahl von Messungen erstellt wird.

2. Verfahren zur Qualitätskontrolle von Oberflächen nach Anspruch 1, **dadurch gekennzeichnet, dass** ein geodätischer Verlauf von der von dem Bilderfassungselement erfassten Oberfläche mit dem aussagekräftigen Wert mit ausgegeben wird.

3. Verfahren zur Qualitätskontrolle von Oberflächen nach Anspruch 1 oder 2, **dadurch gekennzeichnet, dass** der aussagekräftige Wert durch Vergleich von zumindest Teilen der von dem Bilderfassungselement aufgenommenen Oberfläche mit dem Kontrollmodell durch Einblendung in das Abbild erhalten wird.

4. Verfahren zur Qualitätskontrolle von Oberflächen nach Anspruch 3, **dadurch gekennzeichnet, dass** der aussagekräftige Wert in Form eines Verlaufes über die von dem Bilderfassungselement aufgenommene Oberfläche ausgegeben wird.

5. Verfahren zur Qualitätskontrolle von Oberflächen nach Anspruch 4, **dadurch gekennzeichnet, dass** der Verlauf in einer Grafik ausgegeben wird, in der mindestens eine Dimension der geodätische Verlauf ist und mindestens eine Dimension zumindest eine Auswahl der für die Qualität der Oberfläche relevanten Kriterien wiedergibt.

6. Verfahren zur Qualitätskontrolle von Oberflächen nach Anspruch 5, **dadurch gekennzeichnet, dass** als für die Qualität relevante Kriterien Farbe und/oder Glanzgrad und/oder Wolkigkeit und/oder Farbverlauf und/oder Struktur bzw. Glattheit (Verlauf) und/oder die Oberflächenwirkung in Übergangsbereichen zweier unterschiedlicher Bauteile erfasst und bewertet werden.

7. Verfahren zur Qualitätskontrolle von Oberflächen nach einem der Ansprüche 1 bis 6, **dadurch gekennzeichnet, dass** in diesem die Wahrnehmung mehrerer Qualitätskriterien der Oberfläche durch das menschliche Auge simuliert wird.

8. Verfahren zur Qualitätskontrolle von Oberflächen nach einem der Ansprüche 1 bis 7, **dadurch gekennzeichnet, dass** als mindestens eines der für die Qualität relevanten Kriterien die Struktur einer nichtlackierten Oberfläche Beflockung und/oder deren Farbwirkung erfasst wird.

9. Verfahren zur Qualitätskontrolle von Oberflächen nach einem der Ansprüche 1 bis 8, **dadurch gekennzeichnet, dass** ein nicht homogener Oberflächenbereich erfasst wird.

10. Verfahren zur Qualitätskontrolle von Oberflächen nach Anspruch 9, **dadurch gekennzeichnet, dass** ein Unterbrechungen zwischen einem ersten Bauteil und einem zweiten Bauteil aufweisender Oberflächenbereich erfasst wird.

11. Verfahren zur Qualitätskontrolle von Oberflächen nach einem der vorhergehenden Ansprüche, **dadurch gekennzeichnet, dass** in einer Messung ein Bereich von wenigstens 2 % einer hinsichtlich der Qualität der Oberfläche zu untersuchenden Gesamtfläche eines Gegenstands erfasst wird.

12. Verfahren zur Qualitätskontrolle von Oberflächen nach einem der Ansprüche 1 bis 11, **dadurch gekennzeichnet, dass** mittels des Bilderfassungselements eine Aufnahme eines Ausschnitts von wenigstens 5 % einer hinsichtlich der Qualität der Oberfläche zu untersuchenden Gesamtfläche eines Gegenstands erstellt und dann ausgewertet wird.

13. Verfahren zur Qualitätskontrolle von Oberflächen nach einem der vorhergehenden Ansprüche, **dadurch gekennzeichnet, dass** die Erfassung der zu untersuchenden Oberfläche mittels eines Bilderfassungselementes in einem Raum mit schwarzer Oberfläche erfolgt.

14. Verfahren zur Qualitätskontrolle von Oberflächen nach einem der vorhergehenden Ansprüche, **dadurch gekennzeichnet, dass** die Erfassung der zu untersuchenden Oberfläche unter normierten Bedingungen hinsichtlich der Beleuchtung, erfolgt.

15. Verfahren zur Qualitätskontrolle von Oberflächen, nach einem der vorhergehenden Ansprüche, **dadurch gekennzeichnet, dass** mittels eines Bilderfassungselements ein Foto erstellt wird, welches dann bewertet wird.

16. Verfahren zur Qualitätskontrolle von Oberflächen nach einem der vorhergehenden Ansprüche, **dadurch gekennzeichnet, dass** für einen bestimmten Farbton ein Farbkontrollmodell festgelegt wird, welches dann mit einem als Ergebnis der Auswertung bei der Kontrolle der Oberfläche erhaltenen Foto verglichen wird.

17. Verfahren zur Qualitätskontrolle von Oberflächen nach einem der vorhergehenden Ansprüche, **dadurch gekennzeichnet, dass** ein Foto der zu beurteilenden Oberfläche und ein Vergleichsfoto des Farbkontrollmodells gemeinsam betrachtet und bewertet werden.

18. Verfahren zur Qualitätskontrolle von Oberflächen nach einem der vorhergehenden Ansprüche, **dadurch gekennzeichnet, dass** ein Foto der zu beurteilenden Oberfläche und ein Vergleichsfoto des Farbkontrollmodells zur Bewertung nebeneinander oder ineinander abgebildet werden.

19. Verfahren zur Qualitätskontrolle von Oberflächen nach einem der vorhergehenden Ansprüche, **dadurch gekennzeichnet, dass** die lackierte Oberfläche mindestens eine farbbestimmende Schicht und/oder eine Klarlackschicht in einer durchschnittlichen Dicke von mindestens 5 µm bis 120 µm umfasst.

20. Verfahren zur Qualitätskontrolle von Oberflächen nach einem der vorhergehenden Ansprüche, **dadurch gekennzeichnet, dass** mindestens 5 % der von außen sichtbaren Lackfläche eines Karosserietyps bei der Qualitätskontrolle überprüft wird.

21. Verfahren zur Qualitätskontrolle von Oberflächen nach Anspruch 6, **dadurch gekennzeichnet, dass** die Wolkigkeit bzw. der Farbverlauf eine Farbton- und/oder Helligkeitsänderung beinhalten, die sich über eine Strecke von mindestens 5 mm erstreckt.

22. Verfahren zur Produktion eines lackierten Gegenstands, **dadurch gekennzeichnet, dass** mindestens ein Teilbereich des lackierten Gegenstandes nach mindestens einem der vorhergehenden Ansprüche kontrolliert wird und in Abhängigkeit des ausgegebenen gemeinsamen Werts eine Änderung mindestens eines Applikationsparameters des Lackierprozesses und/oder eine Änderung des Lackmaterials erfolgt.

## Claims

1. Method for the quality control of coated surfaces, comprising a measuring device with at least one image detection element, wherein at least two different criteria relevant to the quality of the surface are jointly detected and evaluated by means of an evaluation unit, and wherein the evaluation unit outputs a value which is meaningful for at least these two criteria in the form of an image or photograph of the surface recorded by the image detection element or in the form of a graphic, **characterized in that** the meaningful value is obtained by comparison of at least parts of the surface recorded by the image detection element with a control model, and **in that** the control model is created by averaging of a plurality of measurements.

2. Method for the quality control of surfaces according to Claim 1, **characterized in that** a geodetic profile of the surface detected by the image detection element is concomitantly output with the meaningful value.

3. Method for the quality control of surfaces according to Claim 1 or 2, **characterized in that** the meaningful value is obtained by comparison of at least parts of the surface recorded by the image detection element with the control model by insertion into the image.

4. Method for the quality control of surfaces according to Claim 3, **characterized in that** the meaningful value is output in the form of a profile over the surface recorded by image detection element.

5. Method for the quality control of surfaces according to Claim 4, **characterized in that** the profile is output in a graphic in which at least one dimension is the geodetic profile and at least one dimension reproduces at least one selection of the criteria relevant to the quality of the surface.

6. Method for the quality control of surfaces according to Claim 5, **characterized in that** colour and/or gloss and/or cloudiness and/or colour profile and/or structure or smoothness (flow) and/or the surface effect in transition regions of two different components are detected and assessed as criteria relevant to the quality.

7. Method for the quality control of surfaces according to any of Claims 1 to 6, **characterized in that** the perception of a plurality of quality criteria of the surface by the human eye is simulated in this method.

8. Method for the quality control of surfaces according to any of Claims 1 to 7, **characterized in that** the structure of a non-coated surface, flocking and/or the colour effect thereof is detected as at least one of the criteria relevant to quality.

9. Method for the quality control of surfaces according to any of Claims 1 to 8, **characterized in that** a non-homogeneous surface region is detected.

10. Method for the quality control of surfaces according to Claim 9, **characterized in that** a surface region having interruptions between a first component and a second component is detected.

11. Method for the quality control of surfaces according to any of the preceding claims, **characterized in that** a region of at least 2% of a total area of an object that is to be examined with regard to the quality of the surface is detected in a measurement.

12. Method for the quality control of surfaces according to any of Claims 1 to 11, **characterized in that**, by means of the image detection element, a recording of an excerpt of at least 5% of a total area of an object that is to be examined with regard to the quality of the surface is created and then evaluated.

13. Method for the quality control of surfaces according to any of the preceding claims, **characterized in that** the surface to be examined is detected by means of an image detection element in a space having a black surface.

14. Method for the quality control of surfaces according to any of the preceding claims, **characterized in that** the surface to be examined is detected under normalized conditions with regard to illumination.

15. Method for the quality control of surfaces according to any of the preceding claims, **characterized in that** a photograph is created by means of an image detection element, said photograph then being assessed.

16. Method for the quality control of surfaces according to any of the preceding claims, **characterized in that** a colour control model is defined for a specific hue, said colour control model then being compared with a photograph obtained as a result of the evaluation during the control of the surface.

17. Method for the quality control of surfaces according to any of the preceding claims, **characterized in that** a photograph of the surface to be assessed and a comparison photograph of the colour control model are jointly considered and assessed.

18. Method for the quality control of surfaces according to any of the preceding claims, **characterized in that** a photograph of the surface to be assessed and a comparison photograph of the colour control model are imaged alongside one another or one in the other for assessment purposes.

19. Method for the quality control of surfaces according to any of the preceding claims, **characterized in that** the coated surface comprises at least one colour-determining layer and/or a clear coat layer with an average thickness of at least 5 µm to 120 µm.

20. Method for the quality control of surfaces according to any of the preceding claims, **characterized in that** at least 5% of the externally visible coat area of a bodywork type is checked during the quality control.

21. Method for the quality control of surfaces according to Claim 6, **characterized in that** the cloudiness and/or the colour profile comprise a hue and/or brightness change extending over a section of at least 5 mm.

22. Method for the production of a coated object, **characterized in that** at least one partial region of the coated object is controlled according to at least one of the preceding claims and, depending on the joint value output, a change in at least one application parameter of the coating process and/or a change in the coat material are/is effected.

## Revendications

1. Procédé de contrôle de qualité de surfaces peintes avec un dispositif de mesure qui présente au moins un élément de saisie d'image, au moins deux critères différents concernant la qualité de la surface étant saisis conjointement et évalués au moyen d'une unité d'évaluation, une valeur conclusive pour les deux ou plusieurs critères étant délivrée par l'unité d'évaluation sous la forme d'une image ou d'une photographie de la surface enregistrée par l'élément de saisie d'image ou sous la forme d'un graphique, **caractérisé en ce que**
la valeur conclusive est obtenue par comparaison d'au moins certaines parties de la surface enregistrée par l'élément de saisie d'image avec un modèle témoin et
**en ce que** le modèle témoin est obtenu en formant la moyenne de plusieurs mesures.

2. Procédé de contrôle de qualité de surfaces selon la revendication 1, **caractérisé en ce qu'**une évolution géodésique de la surface saisie par l'élément de saisie d'image est délivrée en même temps que la valeur conclusive.

3. Procédé de contrôle de qualité de surfaces selon la revendication 1 ou 2, **caractérisé en ce que** la valeur conclusive est obtenue en comparant au moins certaines parties de la surface enregistrée par l'élément de saisie d'image avec le modèle témoin, par incorporation de ce dernier dans l'image.

4. Procédé de contrôle de qualité de surfaces selon la revendication 3, **caractérisé en ce que** la valeur conclusive est délivrée sous la forme d'une évolution sur la surface enregistrée par l'élément de saisie d'image.

5. Procédé de contrôle de qualité de surfaces selon la revendication 4, **caractérisé en ce que** l'évolution est délivrée dans un graphique dont au moins une dimension est l'évolution géodésique et au moins une dimension reproduit au moins une sélection des critères pertinents dans l'évaluation de la qualité de la surface.

6. Procédé de contrôle de qualité de surfaces selon la revendication 5, **caractérisé en ce que** comme critère pertinent pour l'évaluation de la qualité, on saisit et évalue la couleur, le degré de brillance, le voile, l'évolution de la teinte, la structure ou le caractère lisse (évolution) et/ou l'effet de surface dans des zones de transition entre deux composants différents.

7. Procédé de contrôle de qualité de surfaces selon l'une des revendications 1 à 6, **caractérisé en ce que** la perception de plusieurs critères de qualité de la surface par l'oeil humain est simulée.

8. Procédé de contrôle de qualité de surfaces selon l'une des revendications 1 à 7, **caractérisé en ce que** la structure d'une surface non peinte, son flocage et/ou son effet coloré sont saisis comme au moins l'un des critères pertinents dans l'évaluation de la qualité.

9. Procédé de contrôle de qualité de surfaces selon l'une des revendications 1 à 8, **caractérisé en ce qu'**une partie non homogène de surface est saisie.

10. Procédé de contrôle de qualité de surfaces selon la revendication 9, **caractérisé en ce qu'**une partie de surface qui présente des interruptions entre un premier composant et un deuxième composant est saisie.

11. Procédé de contrôle de qualité de surfaces selon l'une des revendications précédentes, **caractérisé en ce que** dans une mesure, une partie qui représente au moins 2 % de la surface totale d'un objet dont la qualité de la surface doit être étudiée est saisie dans une mesure.

12. Procédé de contrôle de qualité de surfaces selon l'une des revendications 1 à 11, **caractérisé en ce qu'**au moyen de l'élément de saisie d'image, on établit un enregistrement d'une partie qui représente au moins 5 % de la surface totale d' un objet dont la qualité de la surface doit être étudiée, pour ensuite l'évaluer.

13. Procédé de contrôle de qualité de surfaces selon l'une des revendications précédentes, **caractérisé en ce que** la saisie de la surface à étudier s'effectue au moyen d'un élément de saisie d'image dans un espace à surface noire.

14. Procédé de contrôle de qualité de surfaces selon l'une des revendications précédentes, **caractérisé en ce que** la saisie de la surface à étudier s'effectue dans des conditions d'éclairage normalisées.

15. Procédé de contrôle de qualité de surfaces selon l'une des revendications précédentes, **caractérisé en ce qu'**une photographie est enregistrée au moyen d'un élément de saisie d'image et est ensuite évaluée.

16. Procédé de contrôle de qualité de surfaces selon l'une des revendications précédentes, **caractérisé en ce que** pour une teinte définie, on définit un modèle témoin de teinte qui est alors comparé à une photographie obtenue en résultat de l'évaluation lors du contrôle de la surface.

17. Procédé de contrôle de qualité de surfaces selon l'une des revendications précédentes, **caractérisé en ce qu'**une photographie de la surface à évaluer et une photographie comparative du modèle témoin de couleur sont examinées et évaluées conjointement.

18. Procédé de contrôle de qualité de surfaces selon l'une des revendications précédentes, **caractérisé en ce qu'**une photographie de la surface à évaluer et une photographie comparative du modèle témoin de couleur sont formées l'une à côté de l'autre ou l'une dans l'autre pour l'évaluation.

19. Procédé de contrôle de qualité de surfaces selon l'une des revendications précédentes, **caractérisé en ce que** la surface peinte comporte au moins une couche déterminant la couleur et/ou une couche de vernis transparent d'une épaisseur moyenne d'au moins 5 µm à 120 µm.

20. Procédé de contrôle de qualité de surfaces selon l'une des revendications précédentes, **caractérisé en ce qu'**au moins 5 % de la surface peinte visible de l'extérieur est évalué lors d'un contrôle de qualité.

21. Procédé de contrôle de qualité de surfaces selon la revendication 6, dans lequel le voile ou l'évolution de la couleur contient une modification de la teinte et/ou de la luminosité qui s'étend sur au moins 5 mm.

22. Procédé de production d'un objet peint, **caractérisé en ce qu'**au moins une partie de l'objet peint est contrôlée selon au moins l'une des revendications précédentes et **en ce qu'**en fonction de la valeur commune délivrée, on effectue une modification d'au moins un paramètre d'application de l'opération de peinture et/ou une modification du matériau de peinture.
